Europäisches Patentamt

European Patent Office

Office européen des brevets

(11) Veröffentlichungsnummer: **0 317 746 B1**

(19)

(12) **EUROPÄISCHE PATENTSCHRIFT**

(45) Veröffentlichungstag der Patentschrift: **08.07.92**

(51) Int. Cl.⁵: **A01B 73/04**, F16D 3/32

(21) Anmeldenummer: **88116368.7**

(22) Anmeldetag: **04.10.88**

(54) Gelenkige Rahmenverbindung für Futtererntemaschinen.

(30) Priorität: **21.11.87 DE 3739485**

(43) Veröffentlichungstag der Anmeldung:
**31.05.89 Patentblatt 89/22**

(45) Bekanntmachung des Hinweises auf die
Patenterteilung:
**08.07.92 Patentblatt 92/28**

(84) Benannte Vertragsstaaten:
**AT BE CH DE FR IT LI NL SE**

(56) Entgegenhaltungen:
**DE-A- 3 151 481**
**DE-B- 1 158 304**
**DE-B- 1 266 556**
**GB-A- 2 057 239**

(73) Patentinhaber: **CLAAS SAULGAU GMBH**
**Postfach 1154**
**W-7968 Saulgau(DE)**

(72) Erfinder: **Deni, Franz**
**Bergstrasse 14**
**W-7968 Saulgau-Bogenweiler(DE)**
Erfinder: **Rauch, Hans**
**Im Krummeschle 9**
**W-7968 Saulgau-Kleintissen(DE)**

EP 0 317 746 B1

**Beschreibung**

Die Erfindung bezieht sich auf eine gelenkige Rahmenverbindung für Futtererntemaschinen nach dem Oberbegriff des Anspruches 1.

Solche Rahmenverbindungen sind beispielsweise in den Schriften DE-PS 11 58 304 und DE-PS 12 66 556 offenbart. Wie in der Einleitung zur DE-PS 12 66 556 begründet wird, ist die Ausführung nach der DE-PS 11 58 304 zu aufwendig. Andererseits hat die Ausführung nach der DE-PS 12 66 556 den wesentlichen Nachteil, daß die Antriebsverbindung lösbar sein muß. Beide Nachteile sollen und können mit der Ausführung nach der Erfindung vermieden werden.

Die Ausführung nach der Erfindung erfordert entsprechend den Merkmalen des Anspruches 1 lediglich eine gabelförmige Ausbildung der Enden des Maschinenrahmens und des angelenkten Werkzeugträgers, wobei die Gabel des Maschinenrahmens mit einer drehbaren Gelenkkugel und einem Stift und die Gabel des Werkzeugträgers mit einem Stift und einem zum Werkzeugträger parallelen Schlitz so auszurüsten sind, daß die Stifte an den Gabeln die Gelenkkugel, bzw. den Schlitz durchsetzen.

Nach weiteren Merkmalen der Erfindung ist eine den Maschinenrahmen und den angelenkten Werkzeugträger durchsetzende Gelenkwelle längenveränderlich und mit einem Einfach-oder Doppelkreuzgelenk ausgerüstet.

Bei Verwendung eines Doppelkreuzgelenkes an der Gelenkwelle ist es vorteilhaft, wenn die vertikale Achse der Gelenkverbindung des Maschinenrahmens mit dem Werkzeugträger entsprechend dem Vorschlag des Anspruches 4 verläuft. Dadurch wird eine Antriebsübertragung der Gelenkwelle in jeder Lage des Werkzeugträgers zum Maschinenrahmen, also auch in dessen um 90° oder mehr verschwenkten Transportlage ermöglicht, wobei immer die im Werkzeugträger verlaufende Abtriebswelle der Gelenkwelle gleichförmig, das heißt synchron zu der im Maschinenrahmen verlaufenden Antriebswelle antreibbar ist. Ein versehentliches Einschalten des Antriebes in Transportstellung der Maschine ist dabei für das Doppelkreuzgelenk und für die Antriebsverbindung unschädlich.

Am Beispiel einer Kreiselheumaschine wird die Erfindung beispielhaft erläutert.

Fig. 1     zeigt eine Heumaschine schematisch in einer Ansicht von hinten,

Fig. 2     einen vergrößerten Ausschnitt mit einer gelenkigen Rahmenverbindung und

Fig. 3     den vergrößerten Ausschnitt der Fig. 2 in Draufsicht bei ausgestreckter und abgewinkelter Lage der Rahmenverbindung.

Ein Maschinenrahmen (1) stützt sich mit zwei Laufrädern (2) auf den Erdboden ab. Der Maschinenrahmen (1) trägt zwei Arbeitswerkzeuge (3, 3') mit einer senkrechten Achse, die mit nicht dargestellten Getrieben angetrieben werden. Der Maschinenrahmen (1) ist mindestens an einem Ende mit einer in einer Vertikalebene liegenden Gabel (4) versehen. Ein Gabelauge (5) bildet zusammen mit einem Deckel (6) eine Hohlkugel (7). In dieser Hohlkugel (7) ist eine Gelenkkugel (8) drehbar eingelassen. Die Gelenkkugel (8) besitzt eine Mittelbohrung (9). Das andere Gabelauge (10) besitzt einen nach innen gerichteten Stift (15).

Ein Werkzeugträger (12), der mit dem Maschinenrahmen (1) gelenkig zu verbinden ist, hat mindestens an einem Ende ebenfalls eine Gabel (13', 13"). Der Werkzeugträger (12) besitzt ebenfalls ein Laufrad (2) und ein Arbeitswerkzeug (3"). Die Gabel (13', 13") trägt an ihren Enden einen nach außen gerichteten Stift (14) und einen längsgerichteten Schlitz (11). Der Stift (14) am Gabelauge (13') besitzt einen Bund (14') und der Stift (15) am Gabelauge (10) einen Bund (15'). Der Bund (14') kann sich gegen die Stirnseite der Gelenkkugel (8) anlegen, der Bund (15') gegen die Innenkanten des Schlitzes (11).

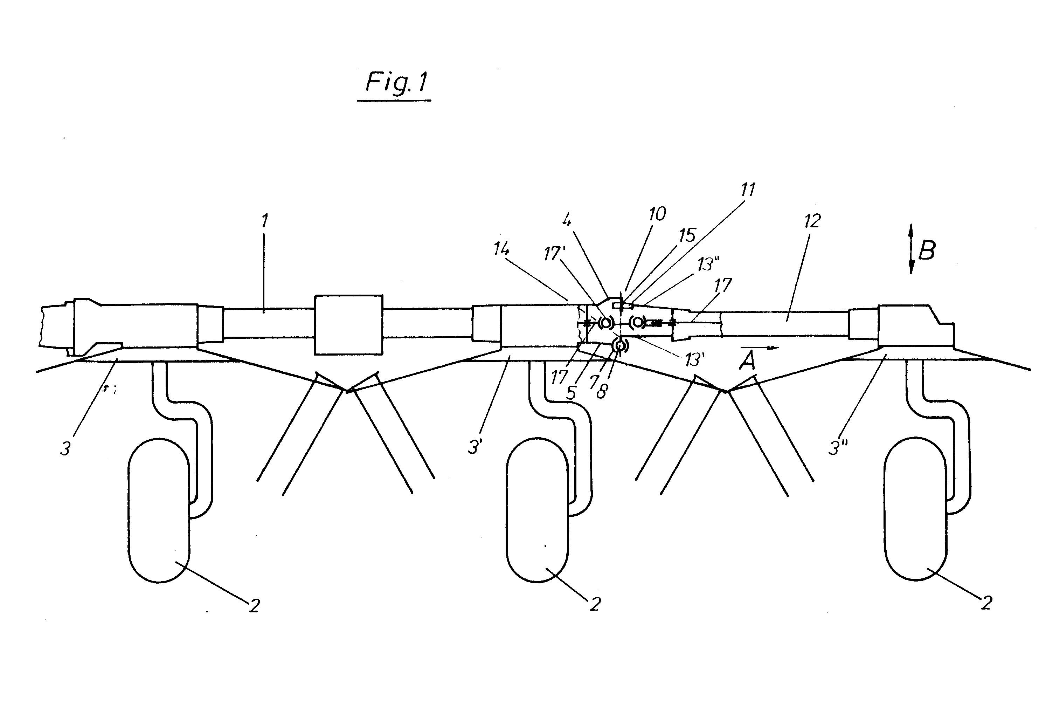

Der Maschinenrahmen (1) und der Werkzeugträger (12) werden von einer Gelenkwelle (17) durchsetzt (Fig. 1), die ein Weitwinkel-bzw. Doppelkreuzgelenk (17') einschließen.

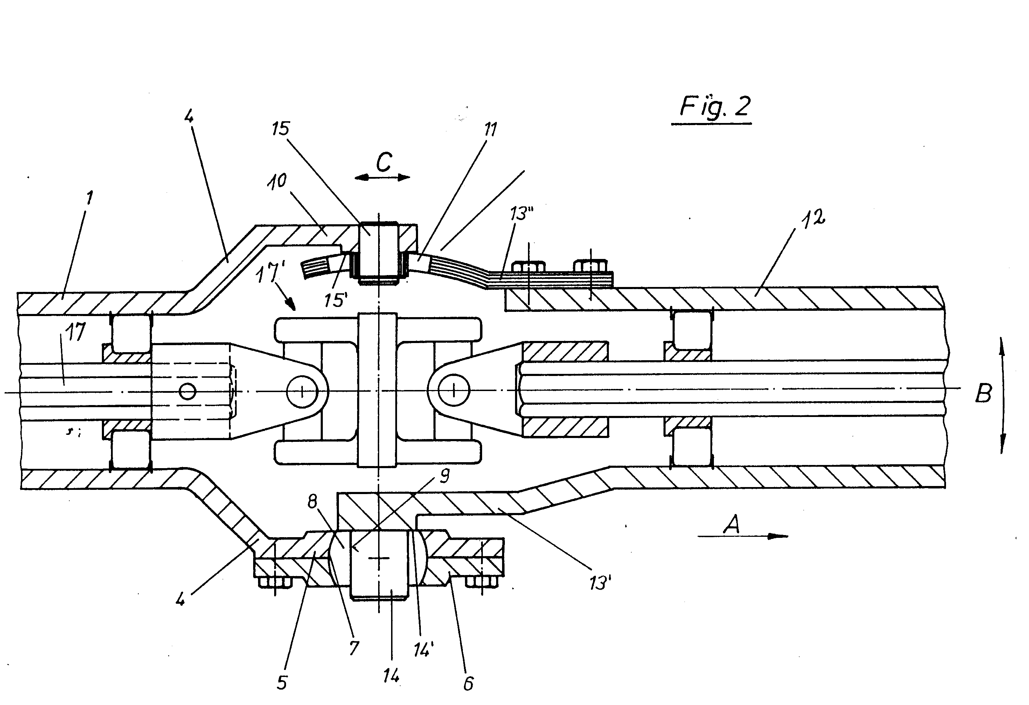

Bei der Arbeit haben der Maschinenrahmen (1) und der Werkzeugträger (12) eine Stellung, wie in den Fig. 1 und 2 gezeigt. Nicht dargestellte Streben verhindern den Werkzeugträger (12) an einer Drehung um die Achse der Stifte (14, 15). Längskräfte im Werkzeugträger (12) in Richtung des Pfeiles A werden von dem Kugelgelenk (7, 8) sicher aufgenommen. Bewegungen zur Bodenanpassung im Sinne des Pfeiles B sind möglich, soweit der Schlitz (11) eine Bewegung am Stift (15) in Richtung des Pfeiles C zuläßt.

Um den Werkzeugträger (12) in eine Transportstellung zu bringen, wird dieser nach Lösen der nicht gezeichneten Streben um die Achse der Stifte (14, 15) etwa um 90° nach hinten verschwenkt. Der Werkzeugträger (12) bleibt auch in dieser Lage in einem Maße höhenbeweglich, wie der Schlitz (11) eine Bewegung am Stift (15) zuläßt.

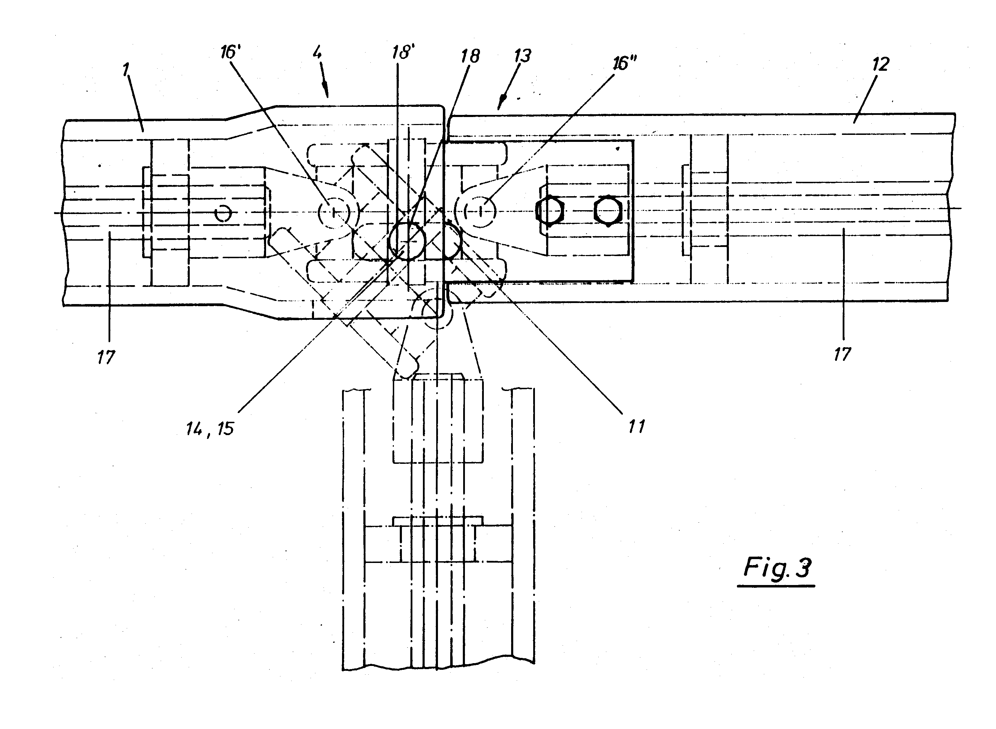

Aus Fig. 3 ist eine vorteilhafte Anordnung der vertikalen Achse (Achse der Stifte 14, 15) der Gelenkverbindung des Maschinenrahmens (1) mit dem Werkzeugträger (12) gezeigt. Die Achse verläuft in etwa der Schnittlinie zweier vertikalen Ebenen (18, 18'), die rechtwinklig und mittig auf einer Verbindungslinie zwischen den Achsen der Kreuzgelenke (16', 16") des Doppelkreuzgelenkes in deren ausgestreckten und deren für eine Transportstellung der Maschine abgewinkelten Lage stehen.

## Patentansprüche

1. Gelenkige Rahmenverbindung für Futtererntemaschinen mit einem Maschinenrahmen (1) und einem daran in einer Vertikalebene beweglich angelenkten Werkzeugträger (12), der zum Transport in einer Horizontalebene um etwa 90° zum Maschinenrahmen um eine vertikale Gelenkachse schwenkbar ist, **dadurch gekennzeichnet**, daß das freie Ende des Maschinenrahmens (1) in der Vertikalebene gabelförmig ausgebildet und ein Gabelauge (5,6) mit einer drehbaren Gelenkkugel (8) oder einem Stift (14) versehen ist, während das andere Gabelauge (10) einen Stift (15) aufweist und daß der angelenkte Werkzeugträger (12) am Ende ebenfalls gabelförmig gestaltet und mit einem Stift (14) oder einer Gelenkkugel (8) an einem Gabelauge (13′) und am anderen Gabelauge (13″) mit einem zur Längserstreckung des Werkzeugträgers (12) parallelen Schlitz (11) versehen ist, wobei ein Stift (14) die Gelenkkugel (8) und der andere (15) den Schlitz (11) durchsetzt.

2. Gelenkige Rahmenverbindung nach Anspruch 1, dadurch gekennzeichnet, daß eine den Maschinenrahmen (1) und den angelenkten Werkzeugträger (12) durchsetzende Gelenkwelle (17) längenveränderlich und mit mindestens einem Kreuzgelenk (16) ausgebildet ist.

3. Gelenkige Rahmenverbindung nach den Ansprüchen 1 und 2, dadurch gekennzeichnet, daß die Gelenkwelle (17) im Bereich der Gelenkverbindung des Maschinenrahmens (1) mit dem Werkzeugträger (12) ein Doppelkreuzgelenk (16′, 16″) aufweist.

4. Gelenkige Rahmenverbindung nach den Ansprüchen 1 und 3, dadurch gekennzeichnet, daß die vertikale Achse (Achse der Stifte 14, 15) der Gelenkverbindung in etwa der Schnittlinie zweier vertikalen Ebenen verläuft, die rechtwinklig und mittig auf einer Verbindungslinie zwischen den Achsen der Kreuzgelenke (16′, 16″) des Doppelkreuzgelenkes in deren ausgestreckten und deren für eine Transportstellung der Maschine abgewinkelten Lage stehen.

## Claims

1. A pivotal frame connection for forage harvesters comprising a machine frame (1) and an impement carrier (12) which is connected thereto movably in a vertical plane and which is pivotable through about 90° relative to the machine frame about a vertical pivot axis for transportation in a horizontal plane, characterised in that the free end of the machine frame (1) is of a forked configuration in the vertical plane and one fork eye (5, 6) is provided with a rotatable pivot ball (8) or a pin (14) while the other fork eye (10) has a pin (15) and that the pivotally connected implement carrier (12) is also of a forked configuration at the end and is provided with a pin (14) or a pivot ball (8) at one fork eye (13') and at the other fork eye (13") with a slot (11) which is parallel to the longitudinal extent of the implement carrier (12), wherein one pin (14) passes through the pivot ball (8) and the other (15) passes through the slot (11).

2. A pivotal frame connection according to claim 1 characterised in that a universally jointed shaft (17) which passes through the machine frame (1) and the pivotally connected implement carrier (12) is variable in length and is provided with at least one universal joint (16).

3. A pivotal frame connection according to claims 1 and 2 characterised in that the universally jointed shaft (17) has a double universal joint (16', 16") in the region of the pivotal connection of the machine frame (1) to the implement carrier (12).

4. A pivotal frame connection according to claims 1 and 3 characterised in that the vertical axis (axis of the pins 14, 15) of the pivotal connection extends in approximately the line of intersection of two vertical planes which are disposed at a right angle and centrally on a connecting line between the axes of the universal joints (16', 16") of the double universal joint in their extended position and their angled position for a transportation position of the machine.

## Revendications

1. Barre porte-outils articulée pour récolteuse fourragère comprenant un châssis de machine (1) et un porte-outils (12) articulé sur celle-ci en étant mobile dans un plan vertical, le porte-outils pouvant être pivoté autour d'un axe de pivotement vertical sur environ 90° par rapport au châssis de la machine pour le transport dans un plan horizontal, caractérisé en ce que l'extrémité libre du châssis (1) de la machine est constituée dans un plan vertical sous forme d'une fourche et un oeillet (5, 6) de la fourche est muni d'une sphère d'articulation (8) ou d'une tige (14) alors que l'autre oeillet (10) de la fourche comprend une tige (15), et en ce que le porte-outils articulé (12) est constitué également à son extrémité en forme de fourche qui est munie d'une tige (14) ou d'une rotule (8) dans un oeillet (13') et d'une fente (11) parallèle à la direction longitudinale du porte-outils (12) dans son autre oeillet (13"), une tige (14) traversant la rotule (8) et l'autre tige (15) traversant la fente (11).

2. Barre porte-outils articulée selon la revendication 1, caractérisée en ce qu'un arbre d'articulation (17) qui traverse le châssis (1) de la machine et le porte-outils (12) qui lui est relié de façon articulée peut être modifié en longueur et comprend au moins une articulation croisée (16).

3. Barre porte-outils articulée selon les revendications 1 et 2, caractérisée en ce que l'arbre d'articulation (17) comprend dans la région de la liaison articulée du châssis (1) de la machine avec le porte-outils (12) une double articulation croisée (16', 16").

4. Barre porte-outils articulée selon l'une des revendications 1 à 3, caractérisée en ce que l'axe vertical (axe des tiges 14, 15) de la liaison articulée est situé sensiblement dans la ligne de coupe de deux plans verticaux qui sont disposés à angle droit et centralement sur une ligne de liaison entre les axes des articulations croisées (16', 16") de la double articulation croisée dans leur position en ligne droite et dans leur position coudée pour une position de transport de la machine.

Fig.1

*Fig. 2*

EP 0 317 746 B1

Fig. 3